Europäisches Patentamt

European Patent Office

Office européen des brevets

(19)

(11) Veröffentlichungsnummer: **0 245 399**
**B1**

(12) **EUROPÄISCHE PATENTSCHRIFT**

(45) Veröffentlichungstag der Patentschrift: **23.01.91**

(21) Anmeldenummer: **86906803.1**

(22) Anmeldetag: **30.10.86**

(86) Internationale Anmeldenummer:
**PCT/EP86/00626**

(87) Internationale Veröffentlichungsnummer:
**WO 87/02948 21.05.87 Gazette 87/11**

(51) Int. Cl.⁵: **B 60 T 8/60, B 60 K 28/16**

(54) ANTRIEBSSCHLUPFREGELSYSTEM.

(30) Priorität: **16.11.85 DE 3540708**

(43) Veröffentlichungstag der Anmeldung:
**19.11.87 Patentblatt 87/47**

(45) Bekanntmachung des Hinweises auf die
Patenterteilung:
**23.01.91 Patentblatt 91/04**

(84) Benannte Vertragsstaaten:
**BE CH DE FR GB LI SE**

(56) Entgegenhaltungen:
**EP-A-0 064 669**
**DE-A-1 806 671**
**DE-A-3 417 089**
**FR-A-2 151 885**
**FR-A-2 509 242**
**FR-A-2 534 198**
**GB-A-1 177 502**
**GB-A-2 128 278**
**US-A-4 042 059**

(73) Patentinhaber: **ROBERT BOSCH GMBH**
**Postfach 50**
**D-7000 Stuttgart 1 (DE)**

(72) Erfinder: **KOPPER, Werner**
**8830 Skylane Drive**
**Brighton, MI 48116 (US)**
Erfinder: **FRANK, Rüdiger**
**Brennerhof**
**D-4056 Luttelforst (DE)**
Erfinder: **SCHRAMM, Herbert**
**Im Götzen 25**
**D-7000 Stuttgart 1 (DE)**
Erfinder: **WÖRNER, Dieter**
**Blankensteinstrasse 5**
**D-7127 Pleidelsheim (DE)**
Erfinder: **MÖLLER, Hubert**
**Bergheimer Strasse 37**
**D-7000 Stuttgart 31 (DE)**

(74) Vertreter: **Kammer, Arno, Dipl.-Ing.**
**ROBERT BOSCH GmbH Zentralabteilung**
**Patente Postfach 50**
**D-7000 Stuttgart 1 (DE)**

Courier Press, Leamington Spa, England.

## Beschreibung

Die Erfindung betrifft ein Antriebsschlupfregelsystem mit den Merkmalen des Oberbegriffs des Anspruches 1.

### Stand der Technik

Es sind Antriebsschlupfregelsysteme bekannt, die einen Bremsregler und einen Motormomentregler aufweisen (z.B. DE—A—31 27 302). Bei diesen Reglern werden die Radgeschwindigkeiten der angetriebenen Räder und der nicht angetriebenen Räder gemessen. Aus den Radgeschwindigkeitssignalen der nicht angetriebenen Räder wird z.B. durch Mittelung eine Bezugsgröße gewonnen, mit der die Radgeschwindigkeitssignale der angetriebenen Räder verglichen werden. Weicht eine der Radgeschwindigkeiten der angetriebenen Räder um ein vorgegebenes Maß (Überschreiten einer Schwelle) von der Bezugsgröße ab, so wird dieses Rad gebremst. Weichen beide Radgeschwindigkeitssignale um ein vorgegebenes Maß von der Radgeschwindigkeit ab, so wird das Motormoment zurückgenommen.

Es ist aus der DE—A—3236 366 ebenfalls bekannt—und hiervon geht die Erfindung aus —die beiden Geschwindigkeiten der angetriebenen Räder miteinander zu vergleichen und das erhaltene $\Delta v$ mit zwei Schwellenwerten zu vergleichen. Wird eine Schwelle überschritten, so wird Druck am schnelleren Rad aufgebaut, und bei Unterschreiten abgebaut.

### Vorteile der Erfindung

Von diesem Stand der Technik unterscheidet sich die Erfindung gemäß den Merkmalen des Anspruchs 1 dadurch, daß keine Schlupfschwelle vorgegeben wird; es wird vielmehr die Abweichung der Geschwindigkeiten der Räder voneinander fortlaufend festgestellt und in Abhängigkeit von dieser Abweichung wird fortlaufend der Bremsdruck berechnet, mit dem das die Abweichung aufweisende Rad gebremst werden soll und der entsprechende Bremsdruck eingesteuert. Dies geschieht durch Ansteuern der entsprechenden Ventile mit Impulsen, wobei die Breite der Öffnungsimpulse unter Berücksichtigung des Istdrücks, des Solldrücks und der vorgegebenen Druckaufbaufunktion ermittelt wird.

Weitere Vorteile und Ausgestaltungen der Erfindung ergeben sich aus den Unteransprüchen und der Figurenbeschreibung.

### Figurenbeschreibung

Anhand der Zeichnung wird ein Ausführungsbeispiel der Erfindung erläutert. Es zeigen:

Fig. 1—einen prinzipiellen Aufbau eines Ausführungsbeispiels eines erfindungsgemäßen Antriebsschlüpfregelsystems

Fig. 2 bis 6—Diagramme zur Erläuterung der Wirkungsweise.

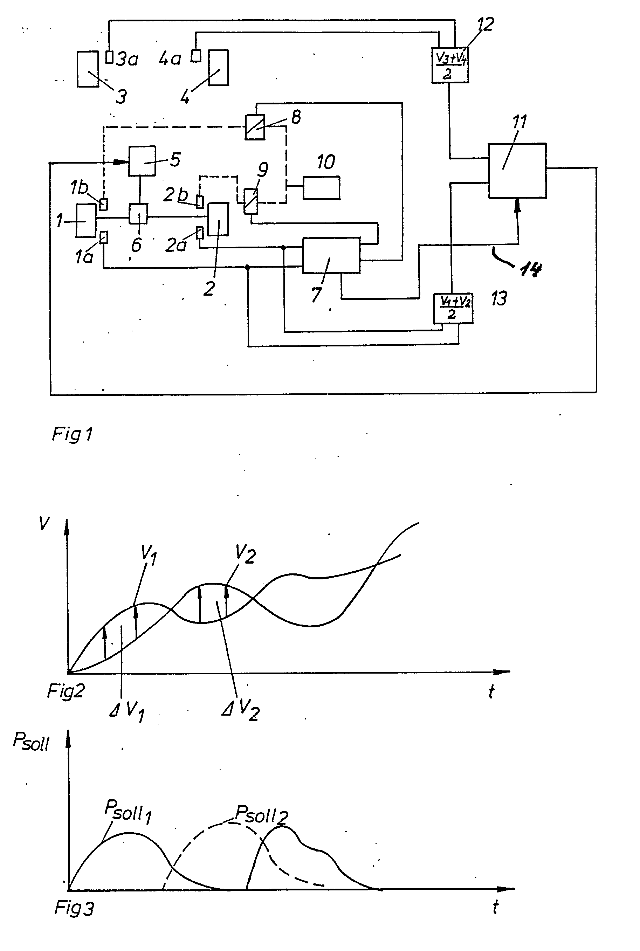

In Figur 1 sind mit 1 und 2 die von einem Motor 5 über ein Differential 6 angetriebenen Räder eines Fahrzeugs bezeichnet und mit 3 und 4 die nicht angetriebenen Räder. Allen Rädern sind Meßwertgeber 1a, 2a, 3a und 4a zur Bestimmung der Radgeschwindigkeit zugeordnet. Außerdem sind die Radbremsen der Hinterräder als Blöcke dargestellt und mit 1b und 2b bezeichnet.

Einem Block 7 werden die Geschwindigkeitssignel der Meßwertgeber 1a und 2a zugeführt. In diesem Block werden die beiden Radgeschwindigkeiten $v_1$ und $v_2$, deren beispielhafte Verläufe in Figur 2 aufgezeichnet sind, miteinander verglichen und jeweils die Abweichungen $\Delta v_1$ bzw. $\Delta v_2$ ermittelt. In Abhängigkeit von diesen $\Delta v$-Werten wird durch den in Block 7 enthaltenen Bremsregler für das betroffene Rad ein Sollbremsdruck $P_{soll}$ berechnet; die Verläufe sind in Fig. 3 aufgezeichnet und mit $P_{soll\ 1}$ bzw. $S_{oll\ 2}$ bezeichnet.

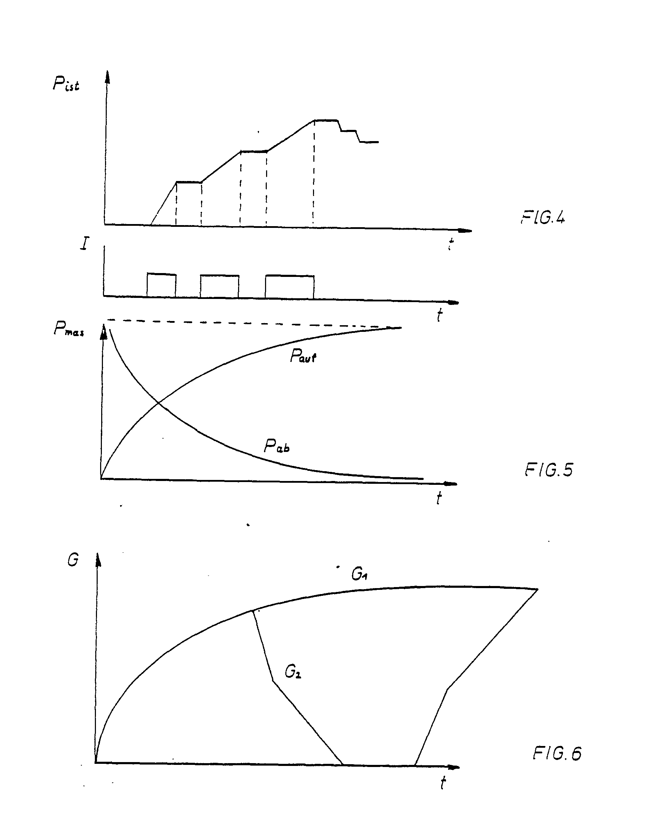

Im Block 7 wird nun unter Berücksichtigung des Istbremsdrücks des Sollbremsdrucks, eines für die Bremsung zur Antriebsschlupfvermeidung vorgegebenen Maximaldrucks $P_{max}$ und der Verläufe der Druckaufbau- ($P_{auf}$) und Druckabbaufunktion ($P_{ab}$) (sh. Figur 5) Impulsbreiten berechnet, mit denen Bremsdrucksteuerventile 8 bzw. 9 angesteuert werden müssen, um den jeweiligen Sollbremsdruck $P_{soll}$ zu erreichen. Hierzu ist eine Druckquelle 10 mit dem Maximalbremsdruck für diesen Fall (z.B. 10 bar) vorgesehen. Die Ventile 8 und 9 sind z.B. Dreistellungsventile, die Druckaufbau, Druckabbau und Druckkonstanthaltung an den Radbremsen 1b bzw. 2b ermöglichen. Die Ansteuerimpulse I unterschiedlicher Breite und der Istdruckverlauf $P_{ist}$ in einem Bremszylinder sind beispielhaft in Figur 4 dargestellt. Der Bremsregler kann PID-Verhalten aufweisen.

Zusätzlich ist noch ein Motormomentregler 11 vorgesehen; diesem Motormomentregler 11 sind Blöcke 12 und 13 vorgeschaltet, denen die Radgeschwindigkeitssignale der nicht angetriebenen Räder (Block 12) und der angetriebenen Räder (Block 13) zugeführt werden und die aus den Radgeschwindigkeiten $v_1$ und $v_2$ bzw. $v_3$ und $v_4$ Mittelwerte

$$\frac{v_1+v_2}{2} \quad \text{bzw.} \quad \frac{v_3+v_4}{2}$$

oder andere Linearkombinationen bilden.

Der Motormomentregler 11, der diese Mittelwerte vergleicht hat integrale oder PI Eigenschaften. Er steuert das Stellglied für das Motormoment so, daß die Stellung des Stellglieds (z.B. Drosselklappe oder Regelstange), das im Motorblock 5 integriert sein soll, zuerst mit größerer Steigung und dann mit geringerer Steigung verstellt wird. Dies ist in Figur 6 gezeigt, wo die Stellung des Gaspedals G über der Zeit aufgetragen ist. Der Verlauf $G_1$ ist vom Fahrer vorgegeben, während $G_2$ den Reglereingriff darstellt.

Ist der Antriebsschlupf zurückgegangen, so wird das Stellglied wieder mit unterschiedlicher Steigung in die vom Fahrer vorgegebene Stellung rückverstellt.

Im Block 7 stehen die Radgeschwindigkeiten $v_1$

und $v_2$ und der berechnete und eingesteuerte Bremsdruck $P_{Ist}$ zur Verfügung aus diesen Größen kann auf die Temperatur an den Bremsen geschlossen werden. Überschreitet diese eine Schwelle, so wird über Leitung 14 ein Steuersignal zum Motormomentregler 11 gegeben, der dann das Motormoment für eine Zeit reduziert. Man könnte mit dem Übertemperatursignal auch den Antriebsschlupfregler insgesamt abschalten oder beide Maßnahmen bei unterschiedlichen Schwellen kombinieren.

**Patentansprüche**

1. Antriebsschlupfregelsystem, bei dem die Radgeschwindigkeiten (V1, V2) der angetriebenen Räder (1, 2) (Meßwertgeber 1a, 2a) gemessen werden, bei dem die den Radgeschwindigkeiten entsprechenden Signale miteinander verglichen werden (in 7) und daraus Antriebsschlupfregelsignale abgeleitet werden und bei dem mittels der Antriebsschlupfregelsignale der Bremsdruck an den einzelnen angetriebenen Rädern (1, 2), durch Steuerventile (8, 9) im Sinne einer Verminderung des Antriebschlupfs variiert wird, dadurch gekennzeichnet, daß aus den beim Vergleich ermittelten Abweichungen ($\Delta v_1$, $\Delta v_2$) mittels eines Bremsreglers (in 7) ein Sollbremsdruck $P_{soll}$ bestimmt wird und daß unter Berücksichtigung des Istdrucks $P_{ist}$, des Sollbremsdrucks $P_{soll}$ und des Verlaufs der bekannten Druckaufbaufunktion ($P_{auf}$) (Fig. 5) die Breiten von Steuerimpulsen (I) bestimmt werden, mit denen die Steuerventile (8, 9) angesteuert werden und daß dieses Verfahren in kurzen Zeitabständen wiederholt wird.

2. Antriebsschlupfregelsystem nach Anspruch 1, dadurch gekennzeichnet, daß in den Druckabbauphasen der Verlauf der Druckabbaufunktion P ab (Fig. 5) berücksichtigt wird.

3. Antriebsschlupfregelsystem nach Anspruch 1 oder 2, dadurch gekennzeichnet, daß der Bremsregler (in 7) PID-Verhalten aufweist.

4. Antriebsschlupfregelsystem nach einem der Ansprüche 1 bis 3, dadurch gekennzeichnet, daß zusätzlich ein Motormomentregler (11) vorgesehen ist, bei dem die Radgeschwindigkeitssignale ($v_1$, $v_2$) der angetriebenen Räder (1, 2) wenigstens mit einem Signal der nicht angetriebenen Räder (3, 4) verglichen werden und bei dem eine Motormomentreduzierung vorgenommen wird, wenn beide Radgeschwindigkeitssignale ($v_1$, $v_2$) der angetriebenen Räder (1, 2) im Sinne eines Antriebsschlupfs um einen vorgegebenen Betrag von dem wenigstens einen Signal der nicht angetriebenen Räder (3, 4) abweichen.

5. Antriebsschlupfregelsystem nach Anspruch 4, dadurch gekennzeichnet, daß die Summe (oder ein Teil davon) der Geschwindigkeitssignale ($v_1$, $v_2$) der angetriebenen Räder (1, 2) mit der Summe (oder ein Teil davon) der Geschwindigkeitssignale ($v_3$, $v_4$) der nicht angetriebenen Räder (3, 4) verglichen wird.

6. Antriebsschlupfregelsystem nach Anspruch 4 oder 5, dadurch gekennzeichnet, daß der Motormomentregler (11) I-Verhalten aufweist.

7. Antriebsschlupfregelsystem nach einem der Ansprüche 4 bis 6, dadurch gekennzeichnet, daß die Stellung der das Motormoment bestimmenden Einrichtung bei Motormomentreduzierung zuerst mit vorgegebener großer Änderungsgeschwindigkeit und danach (ab einer vorgegebenen oder automatisch gelernter Stellung) mit wenigstens einer geringeren Änderungsgeschwindigkeit verstellt wird (Fig. 6).

8. Antriebsschlupfregelsystem nach Anspruch 7, dadurch gekennzeichnet, daß die nach der Motormomentreduzierung folgende Verstellung der Einrichtung im Sinne einer Motormomenthöhung zuerst mit großer Änderungsgeschwindigkeit und danach (ab einer vorgegebenen oder automatisch gelernter Stellung) mit wenigstens einer geringeren Änderungsgeschwindigkeit erfolgt (Fig. 6).

9. Antriebsschlupfregelsystem nach einem der Ansprüche 1 bis 8, dadurch gekennzeichnet, daß für jedes angetriebene Rad aus dem errechneten und eingesteuerten Bremsdruck $P_{ist}$ und der Radgeschwindigkeit auf die an der Bremse herrschende Temperatur geschlossen wird und daß bei Überschreiten von vorgegebenen Temperaturwerten das Motormoment reduziert wird (Leitung 14) und/oder der Antriebsschlupfregler abgeschaltet wird.

**Revendications**

1. Système de régulation du glissement d'une transmission selon lequel on mesure les vitesses ($v_1$, $v_2$) des roues motrices (1, 2) (capteurs 1a, 2a) et dans lequel on compare les signaux correspondant aux vitesses (dans le bloc 7) pour former des signaux de régulation de glissement d'entraînement, et dans lequel à l'aide des signaux de glissement de régulation d'entraînement, on modifie la pression de freinage des différentes roues motrices (1, 2) par des vannes de commande (8, 9) dans le sens d'une réduction du glissement de la transmission, système caractérisé en ce que des déviations ($\Delta v_1$, $\Delta v_2$) sont déterminées par la comparaison, on détermine une pression de freinage de consigne ($P_{consigne}$) à l'aide d'un régulateur de freinage (dans le bloc 7) et en ce qu'en tenant compte de la pression réelle ($P_{reelle}$) de la pression de freinage de consigne ($P_{consigne}$) et de la courbe de la fonction de montée en pression, connue ($P_{montée}$) (figure 5), on détermine la largeur des impulsions de commande (I) à desquelles on commande les vannes de commande (8, 9) et en ce qu'on répète cette opération en des intervalles de temps courts.

2. Système de régulation du glissement d'une transmission selon la revendication 1, caractérisé en ce que dans les phases de chute de pression, on tient compte de la courbe de la montée en pression (P) (figure 5).

3. Système de régulation du glissement d'une transmission selon la revendication 1 ou 2, caractérisé en ce que le régulateur de freinage (dans le bloc 7) présente un comportement proportionnel-intégral-différentiel (PID).

4. Système de régulation du glissement d'une transmission selon l'une des revendications 1 à 3, caractérisé en ce qu'il comporte en outre un régulateur de couple-moteur (11) dans lequel les signaux des vitesses de roues ($v_1$, $v_2$) des roues motrices (1, 2) sont comparés à au moins un signal des roues non motrices (3, 4) et effectuant une réduction du couple-moteur, lorsque les deux signaux de vitesses de roues ($v_1$, $v_2$) des roues motrices (1, 2) diffèrent d'une valeur prédéterminée, dans le sens d'un glissement de transmission, d'au moins un signal des roues non motrices (3, 4).

5. Système de régulation du glissement d'une transmission selon la revendication 4, caractérisé en ce que la somme (ou des parties de celle-ci) des signaux de vitesses ($v_1$, $v_2$) des roues motrices (1, 2) est comparée à la somme (ou une partie de celle-ci) des signaux de vitesses ($v_3$, $v_4$) des roues non motrices (3, 4).

6. Système de régulation du glissement d'une transmission selon la revendication 4 ou 5, caractérisé en ce que le régulateur du couple-moteur (11) présente un comportement intégral (I).

7. Système de régulation du glissement d'une transmission selon l'une des revendications 4 à 6, caractérisé en ce que la position du dispositif qui détermine le couple-moteur est tout d'abord réglée avec une vitesse de variation importante prédéterminée pour une réducteur du couple-moteur, puis (à partir d'une position prédéterminée ou d'une position apprise automatiquement) avec au moins une variation de vitesse plus faible (figure 6).

8. Système de régulation du glissement d'une transmission selon la revendication 7, caractérisé en ce que le réglage du dispositif qui suit une réduction du couple-moteur se fait tout d'abord dans le sens d'une augmentation du couple-moteur avec une vitesse de variation plus grande, puis (à partir d'une position prédéterminée ou d'une position apprise automatiquement) avec au moins une vitesse de variation plus faible (figure 6).

9. Système de régulation du glissement d'une transmission selon l'une des revendications 1 à 8, caractérisé en ce que pour chaque roue motrice, partant de la pression de freinage ($P_{réelle}$) calculée et commandée ainsi que de la vitesse de la roue, on conclut à la température régnant dans le frein et en cas de dépassement de valeurs prédéterminées de la température, on réduit le couple-moteur (ligne 14) et/ou on coupe le régulateur de glissement de transmission.

**Claims**

1. Drive-slip control system, in which the wheel speeds (V1, V2) of the driven wheels (1, 2) (measured-value transmitters 1a, 2a) are measured, in which the signals corresponding to the wheel speeds are compared with one another (in 7) and drive-slip control signals are derived therefrom, and in which, by means of the drive-slip control signals, the brake pressure on the individual driven wheels (1, 2) is varied by means of control valves (8, 9) with the effect of a reduction of the drive slip, characterized in that a desired brake pressure $P_{des}$ is determined by means of a brake controller (in 7) from the deviations ($\Delta V_1$, $\Delta V_2$) obtained from the comparison, and in that the widths of control pulses (I), by means of which the control valves (8, 9) are activated, are determined in the light of the actual pressure $P_{act}$, the desired brake pressure $P_{des}$ and the curve of the known pressure build-up function ($P_{up}$) (Figure 5), and in that this procedure is repeated at short time intervals.

2. Drive-slip control system according to Claim 1, characterized in that the curve of the pressure reduction function $P_{down}$ (Figure 5) is taken into account in the pressure reduction phases.

3. Drive-slip control system according to Claim 1 or 2, characterized in that the brake controller (in 7) has a PID behaviour.

4. Drive-slip control system according to one of Claims 1 to 3, characterized in that there is additionally an engine-torque controller (11), in which the wheel-speed signals ($v_1$, $v_2$) of the driven wheels (1, 2) are compared at least with one signal of the non-driven wheels (3, 4), and in which a reduction of the engine torque is carried out when the two wheel-speed signals ($v_1$, $v_2$) of the driven wheels (1, 2) deviate from the at least one signal of the non-driven wheels (3, 4) by a predetermined amount with the effect of a drive slip.

5. Drive-slip control system according to Claim 4, characterized in that the sum (or part thereof) of the speed signals ($v_1$, $v_2$) of the driven wheels (1, 2) is compared with the sum (or part thereof) of the speed signals ($v_3$, $v_4$) of the non-driven wheels (3, 4).

6. Drive-slip control system according to Claim 4 or 5, characterized in that the engine-torque controller (11) has an I behaviour.

7. Drive-slip control system according to one of Claims 4 to 6, characterized in that, in a reduction of the engine torque, the position of the device determining the engine torque is adjusted first at a predetermined high rate of change and thereafter (from a predetermined or automatically learned position) at at least one lower rate of change (Figure 6).

8. Drive-slip control system according to Claim 7, characterized in that the adjustment of the device following the engine-torque reduction with the effect of an increase of the engine torque takes place first at a high rate of change and thereafter (from a predetermined or automatically learned position) at at least one lower rate of change (Figure 6).

9. Drive-slip control system according to one of Claims 1 to 8, characterized in that, for each driven wheel, the temperature prevailing on the brake is concluded from the calculated and selected brake pressure $P_{act}$ and from the wheel speed, and in that, when predetermined temperature values are exceeded, the engine torque is reduced (line 14) and/or the drive-slip controller is cut off.

EP 0 245 399 B1

Fig 1

Fig2

$\Delta V_1$  $\Delta V_2$

Fig 3

1

$P_{ist}$

*FIG.4*

$I$

$P_{max}$

$P_{auf}$

$P_{ab}$

*FIG.5*

$G$

$G_1$

$G_2$

*FIG.6*